# FASCICULE DE BREVET EUROPEEN

(11) **EP 4 616 766 B1**
(45) Date de publication et mention de la délivrance du brevet: **13.05.2026**
(21) Numéro de dépôt: 25163006.7
(22) Date de dépôt: 11.03.2025
(51) Int. Cl.: A47C 17/175, B60N 2/34, B64D 11/06

(54) **SOFA AÉRONAUTIQUE CONVERTIBLE AVEC DOSSIER INSÉRABLE SOUS UNE HAUTEUR DONNÉE**
UMWANDELBARES FLUGZEUGSOFA MIT EINER UNTER EINER GEGEBENEN HÖHE EINSTECKBAREN RÜCKENLEHNE
CONVERTIBLE AERONAUTICAL SOFA WITH INSERTABLE BACK AT GIVEN HEIGHT

(30) Priorité: 12.03.2024 FR 2402437
(43) Date de publication de la demande: 17.09.2025
(73) Titulaire: Airbus Atlantic, 17300 Rochefort (FR)
(72) Inventeur: CLOET, Frédéric, 17300 ROCHEFORT (FR); COLLINS, Mark, 1239 COLLEX-BOSSY (CH); COLLINS, Alexandra, 1239 COLLEX-BOSSY (CH); BRUYÈRE, Jean-Baptiste, 1239 COLLEX-BOSSY (CH)
(74) Mandataire: Santarelli

(56) Documents cités:
- WO-A1-96/37378
- DE-A1- 102010 054 090
- FR-A1- 2 894 796
- GB-A- 911 097

## Description

### DOMAINE TECHNIQUE

La présente invention appartient au domaine de l'aménagement de cabines de véhicules de transport de passagers, notamment les aéronefs, et concerne plus particulièrement un sofa aéronautique convertible en lit et comportant un dossier insérable sous une hauteur donnée imposée.

L'invention trouve une application directe, mais non exclusive, dans l'aménagement de cabines d'avions de ligne en classe supérieure (classe affaires ou première classe).

### ÉTAT DE L'ART

En transport aérien, le niveau de confort exigé dans les classes supérieures (classe affaires et première classe) d'avions de ligne doit pouvoir offrir aux passagers la possibilité de s'allonger dans une position confortable, notamment de couchage, surtout lorsque la durée du vol est longue, et de bénéficier d'une certaine intimité vis-à-vis des autres passagers.

Pour satisfaire à ce besoin, les compagnies aériennes incorporent des fauteuils convertibles en lit. Ces fauteuils sont connus depuis longtemps et existent sous de nombreuses conceptions.

Toutefois, l'agencement de fauteuils convertibles peut parfois impliquer des contraintes liées à l'environnement du fauteuil, à l'utilisation de l'espace disponible et au niveau de confort souhaité.

En effet, il arrive parfois que les fauteuils convertibles soient placés dans des compartiments individuels, également appelés suites passagers, disposant d'autres commodités, voire de sièges d'appoint, avec lesquels le fauteuil principal doit pouvoir coopérer dans ses différentes positions en respectant des contraintes dimensionnelles. Plus particulièrement, le fauteuil doit pouvoir offrir une surface maximale de couchage en position lit tout en permettant une accessibilité optimale aux autres commodités quelle que soit sa position.

Pour les premières classes les plus luxueuses, les compagnies aériennes complètent leurs offres en ajustant l'espace dédié au passager de sorte à y inclure un maximum de services annexes de distraction, et ce le plus ergonomiquement possible, et/ou en agrandissant cet espace pour atténuer l'effet de cloisonnement et/ou pour pouvoir y aménager d'autres pièces de mobilier supplémentaires telles que des banquettes, des consoles pouvant servir de minibar. Le but recherché est bien évidemment l'amélioration de l'expérience du passager durant le vol avec plus de confort et plus de convivialité.

A titre d'exemple, le brevet FR3095190, au nom du demandeur, décrit une suite passager comprenant un siège convertible, un sofa, un siège d'appoint, une console et une porte coulissante d'accès. Le sofa comporte un premier coin, une partie centrale et un deuxième coin. Le siège convertible et le siège d'appoint sont accolés latéralement respectivement au premier coin et au deuxième coin de sorte que lesdits sièges soient en vis-à-vis, et la partie centrale du sofa est convertible en tablette.

Cette suite passager comprend un seul écran placé au-dessus du niveau des dossiers du sofa et du siège d'appoint, ces derniers n'étant pas convertibles en lit en sorte que la longueur desdits dossiers n'a pas besoin d'être suffisamment grande. En revanche, le dossier du siège convertible présente nécessaire une certaine longueur le faisant dépasser le niveau de l'écran placé en face.

Ainsi, il n'est pas possible de disposer un deuxième écran au-dessus du siège convertible (celui du passager principal) à destination d'une personne assise en face du passager principal, tout en garantissant un angle optimal de confort visuel. Un autre problème concerne le niveau de confort du fauteuil. Les fauteuils passagers des avions peuvent être utilisés pour des vols de jour, au cours desquels le passager voudra travailler, manger et/ou se détendre, et pour des vols de nuit, au cours desquels le passager voudra dormir. De préférence, un tel fauteuil devrait pouvoir offrir des positions confortables pour toutes ces activités, tout en étant capable de respecter des contraintes dimensionnelles liées à son environnement.

Un autre problème concerne l'apparition de décalages entre les différentes partie du fauteuil lors de sa conversion, débouchant sur des espaces non fonctionnels dans lesquels le passager peut faire tomber ses affaires personnelles : espace derrière le dossier, espace interstitiel entre l'assise et le dossier, etc.

Enfin, dans les solutions antérieures, lorsqu'il est nécessaire de restreindre la dimension d'une partie du fauteuil, il est d'usage d'utiliser des parties pliables telles que les repose-jambes et les appui-têtes.

Or, le pliage d'une partie souple induit toujours l'apparition d'un tas, de grande épaisseur, encombrant et d'apparence disgracieuse.

Le document US2016052633, en référence à la figure 1, décrit un module pour passagers destiné à une cabine d'avion, lequel module comprend un fauteuil F agencé face à une banquette B convertible en lit (de type « clic-clac »). Un écran est placé au-dessus du dossier de la banquette, face au fauteuil F. En raison de l'espace limité entre le fauteuil et la banquette, le fauteuil ne peut pas être convertible en lit. De ce fait, cette solution propose que la banquette soit convertible dans le sens de sa largeur afin que son assise et son dossier puissent avoir de faibles largeurs individuellement mais une largeur cumulée suffisante pour former une surface de couchage. Le document WO 96/37378 A1 décrit un fauteuil extensible ayant un mécanisme pour obtenir une surface de repos horizontale, le fauteuil comprenant une structure supportant une assise, cette structure étant mobile en translation. Le fauteuil comprend un dossier monté pivotant sur la structure.

### PRÉSENTATION DE L'INVENTION

La présente invention vise à pallier tout ou partie des inconvénients de l'art antérieur exposés ci-avant en proposant une solution ergonomique de sofa respectant des contraintes dimensionnelles dans un agencement de cabine d'avion.

Un objectif de l'invention est donc de proposer un sofa avec une cinématique particulière pour qu'il puisse se convertir entre ses deux positions (assise et couchée) malgré la présence de contraintes dimensionnelles.

Un autre objectif de l'invention est de proposer une alternative innovante aux arrangements existants.

À cet effet, la présente invention a pour objet un sofa selon la revendication 1. L'invention revendique aussi un compartiment selon la revendication 6 et un avion selon la revendication 9. Des modes de réalisation préférés sont revendiqués dans les revendications 2 á 5 pour le sofa et de 7 à 8 pour le compartiment.

Ainsi, une partie du dossier « disparait » sous le niveau de l'assise lorsque le sofa est en position assise, permettant audit dossier de s'insérer sous une hauteur limitée, sous un écran idéalement placé par exemple. Le dossier retrouve sa longueur totale lorsque le sofa est en position de couchage pour que le passager dispose d'une surface maximale de couchage.

La translation de la structure fait déplacer tout le sofa parallèlement au plancher sur lequel il est monté, afin de permettre un dégagement du dossier, notamment par rapport à un écran qui serait placé juste au-dessus, et la translation vers le haut dudit dossier pour amorcer son basculement vers la position de couchage.

Cette cinématique particulière évite ainsi tout pliage des surfaces souples du sofa.

Plus particulièrement, les mouvements de translation de la structure permettant de faire avancer et reculer le sofa, de translation propre du dossier permettant de le monter et de le descendre, et de rotation dudit dossier permettant de le rabattre et de le redresser, sont indépendants, le sofa comprenant un actionneur pour chacun de ces mouvements, autrement dit un actionneur par mouvement.

Selon un mode de réalisation, le mouvement de rotation du dossier est effectué au moyen d'une crémaillère circulaire reliant ledit dossier à la structure et permettant de déporter l'axe de rotation du dossier au niveau de la jonction avec l'assise.

L'axe de rotation est ainsi un axe fictif confondu avec une ligne de jonction transversale entre l'assise et le dossier.

Selon un mode préféré de réalisation, la longueur du dossier est inférieure à la longueur de l'assise, donnant au sofa une forme de méridienne adaptée à la détente du passager avec ses jambes complètement allongées.

Selon un aspect de l'invention, l'assise et le dossier comprennent des faces latérales, respectivement arrière et avant, destinées à s'accoler en position de couchage du sofa, ladite face latérale arrière et ladite face latérale avant étant inclinées respectivement par rapport à la surface supérieure de l'assise d'un angle inférieur à 90° et par rapport la surface supérieure du dossier d'un angle supérieur à 90°, la somme des deux angles étant égale à 180°.

Cela permet d'optimiser la jonction afin de limiter au maximum la fente (le gap) qui peut se créer entre l'assise et le dossier et par laquelle certains objets personnels du passager peuvent tomber.

La présente invention a également pour objet un compartiment pour véhicule de transport de passagers tel qu'un avion, comprenant au moins une console de commodité (rangements, minibar, plateau cocktail, etc.) et un écran d'affichage, et comprenant en outre un sofa tel que présenté, ledit écran étant placé au-dessus du dossier du sofa.

Selon un aspect fondamental de l'invention, l'écran est placé à une hauteur de l'assise lorsque le sofa est en position assise, ladite hauteur étant inférieure à la longueur du dossier, le surplus de longueur dudit dossier étant stocké au-dessous de l'assise, en partie dans le l'espace prévu dans la structure.

En effet, la position de l'écran est imposée pour des raisons de confort visuel d'un passager qui serait installé dans un siège d'appoint face au sofa.

Selon un mode de réalisation, le compartiment comprend en outre un fauteuil d'appoint placé en face et en regard du sofa.

Enfin, la présente invention a également pour objet un avion de ligne, comprenant au moins un compartiment tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un sofa aéronautique convertible, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : (déjà citée) agencement de l'art antérieur avec des compartiments comprenant une banquette convertible et un fauteuil ;
- Figure 2 : une vue en perspective d'un sofa selon un mode de réalisation de l'invention, placé dans un compartiment de première classe d'avion ;
- Figure 3a : une vue en perspective plongeante du sofa en position assise ;
- Figure 3b : une vue en perspective plongeante, en orientation inversée par rapport à la figure 3a ; du sofa en position de couchage ;
- Figure 4 : une vue de côté du sofa dans ses deux positions, assise (a) et de couchage (b), montrant les contraintes dimensionnelles de l'environnement ;
- Figure 5a : le sofa en position assise, au début de la conversion ;
- Figure 5b : le sofa après une première translation d'ensemble pour dégager le dossier de l'écran placé au-dessus ;
- Figure 5c : le sofa avec le dossier translaté vers le haut ;
- Figure 5d : le sofa pendant la translation d'ensemble et la rotation du dossier ;
- Figure 5e : le sofa dans une position consécutive à celle de la figure 5d ;
- Figure 5f : le sofa dans une position consécutive à celle de la figure 5e ;
- Figure 5g : le sofa en fin de translation et avec le dossier en rotation ;
- Figure 5h : le sofa dans une position consécutive à celle de la figure 5g ;
- Figure 5i : le sofa en position finale de couchage, à la fin de la conversion ;
- Figure 6 : une vue de détail de la jonction entre l'assise et le dossier, en position assise (a) et en position de couchage (b) du sofa ;
- Figure 7 : une superposition de la position assise, de la position de couchage et d'une position intermédiaire de conversion dans laquelle le dossier est remonté ;
- Figure 8 : un plan partiel d'aménagement de cabine avec des compartiments selon l'invention.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un fauteuil convertible, à la cinématique particulière, principalement destiné à être agencé sous contraintes dimensionnelles dans un compartiment d'avion en classe supérieure. Cet exemple, non limitatif, est donné pour une meilleure compréhension de l'invention et n'exclut pas l'utilisation du fauteuil dans d'autres véhicules de transport de passagers offrant le niveau de confort requis.

Dans la suite de la description, le terme « convertible » désigne l'aptitude d'un fauteuil passager à être configuré en au moins deux positions fonctionnelles : une position assise dans laquelle le passager peut être assis normalement ; et une position de couchage dans laquelle le passager peut être complètement allongé. Le terme « compartiment » désigne un espace privatif au sein de la cabine, configuré pour accueillir un ou plusieurs sièges passagers. Cet espace peut inclure des aménagements spécifiques tels que des rangements, des éléments de confort et des facilités de divertissement à destination des passagers.

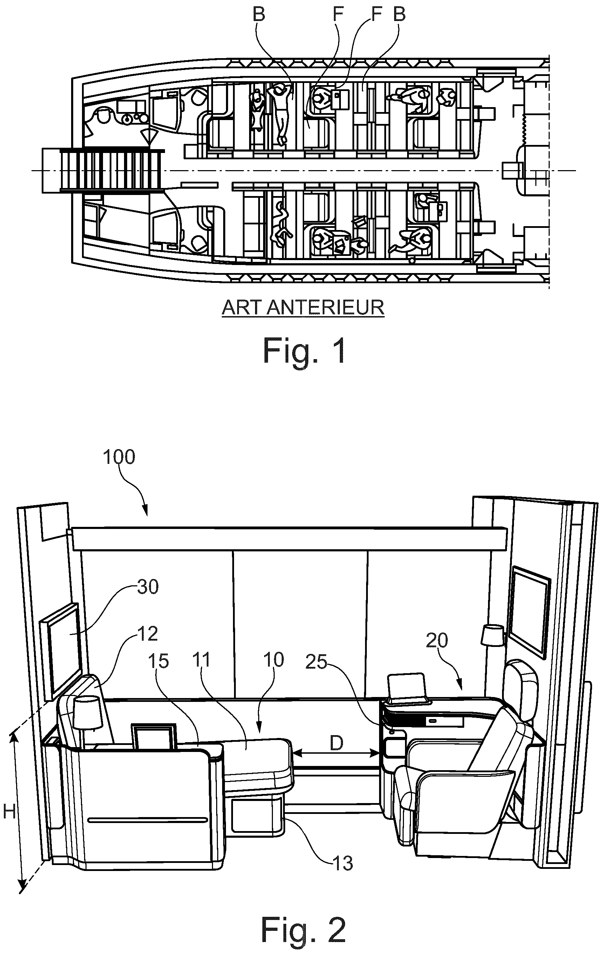

La figure 2 représente un compartiment 100 pour passagers, comprenant un premier fauteuil convertible 10, dit sofa, et un deuxième fauteuil convertible 20 différent et agencé en vis-à-vis du premier. Le sofa 10, à la différence du deuxième fauteuil 20 de conception classique, comporte une assise 11 de grande longueur pour permettre une position « détente » du passager, dans laquelle le passager a ses jambes complètement allongées le long de ladite assise.

Le sofa 10 comporte un dossier 12 contre lequel le passager peut s'adosser lorsqu'il est en position « détente ».

Le sofa 10 comporte une structure 13 supportant l'assise 11 et le dossier 12, ladite structure pouvant être fixée à un plancher de manière coulissante.

Le sofa 10 est convertible en lit et présente à cet effet deux positions : une position assise, appelée position d'accueil dans le jargon, dans laquelle le passager est assis avec ses jambes allongées grâce à la grande taille de l'assise 11 qui lui confère une forme de méridienne ; et une position de couchage dans laquelle l'assise 11 et le dossier 12 sont sensiblement coplanaires suivant un plan sensiblement parallèle au plancher de l'avion.

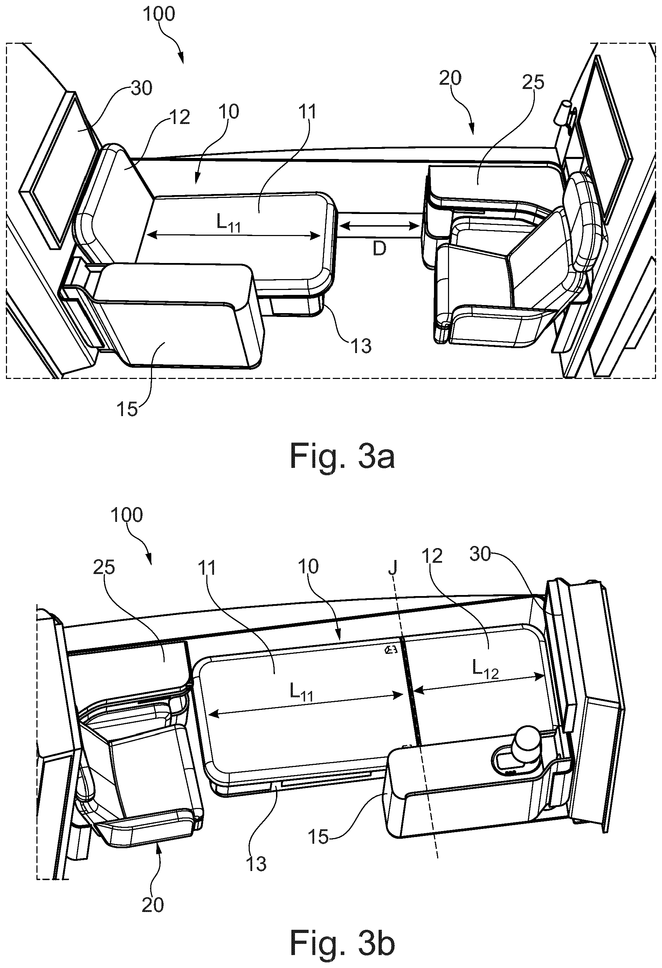

La figure 3a et la figure 3b représentent respectivement le sofa 10 en position assise et en position de couchage.

L'assise 11 et le dossier 12 du sofa 10 présentent des dimensions adaptées à occuper tout l'espace disponible devant le deuxième fauteuil 20, lorsque ledit sofa est en position de couchage.

Plus précisément, une distance D qui subsiste entre le bord avant de l'assise 11 et une console 25 associée au deuxième fauteuil 20 lorsque le sofa 10 est position assise comme représenté sur la figure 2, est couverte quasi intégralement lorsque ledit sofa est en position de couchage comme représenté sur la figure 3b.

L'espace vide qui s'étend sur cette distance D est comblé par l'assise 11 du sofa 10 lorsque ce dernier est position de couchage. Pour ce faire, et compte tenu de la longueur L₁₁ de l'assise 11, le dossier 12 présente nécessairement une longueur L₁₂ suffisante pour que lesdits dossier et assise occupent tout l'espace disponible en position de couchage.

La longueur L₁₂ du dossier 12 étant définie, celui-ci est configuré pour s'insérer au-dessous d'un écran 30 accroché à une hauteur H du plancher. La hauteur H sépare le plancher de l'avion et le côté inférieur de l'écran 30, ce dernier présentant une forme rectangulaire habituelle.

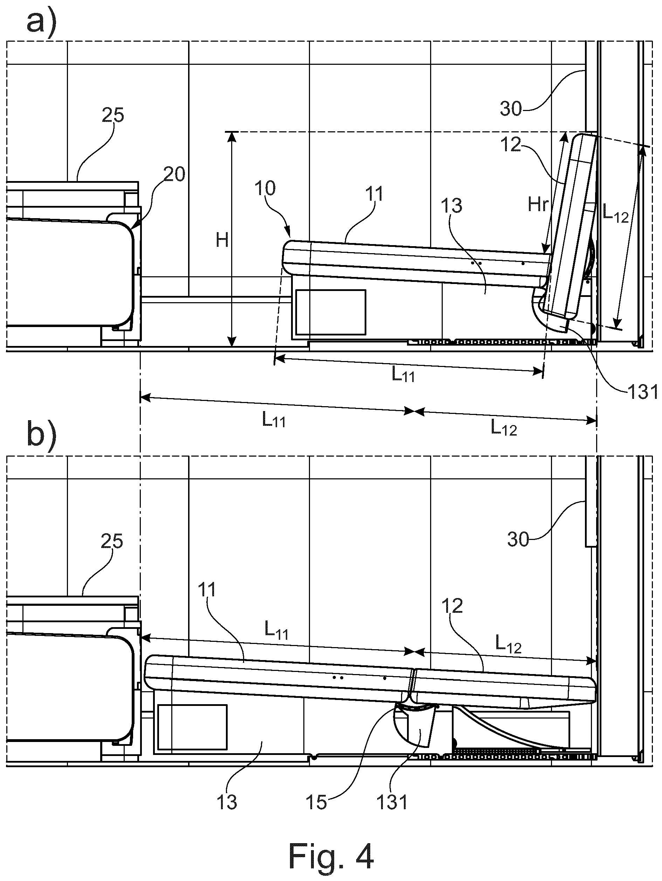

En effet, dans le contexte industriel particulier de l'invention, la hauteur H de l'écran ainsi que la distance D sont imposées. Le sofa 10 est donc conçu pour évoluer avec ses deux contraintes dimensionnelles. D'une part, le sofa 10 doit pouvoir occuper tout l'espace disponible devant le deuxième fauteuil 20 afin de garantir une surface de couchage la plus grande possible. D'autre part, le dossier 12 du sofa 10, qui présente une longueur nécessaire à la première fonction, doit pouvoir s'insérer sous l'écran 30 lorsque le sofa 10 est en position assise sans que ledit dossier ne cache la moindre partie de l'écran à un passager du fauteuil 20 d'en face, sachant que la longueur L₁₂ du dossier est nettement supérieure à une hauteur résiduelle Hr qui existe entre la surface supérieure de l'assise 11 et le côté inférieur de l'écran 30, comme représenté sur la figure 4.

La figure 4 permet de visualiser ces différentes contraintes dimensionnelles dans les deux positions du sofa 10.

En (a), le sofa 10 est en position assise. Dans cette position, l'écran 30 se trouve à la hauteur résiduelle Hr par rapport au dossier 11. La hauteur résiduelle Hr est nettement inférieure à la longueur L₁₂ du dossier 12. Ainsi, le dossier 12 est partiellement stocké au-dessous du niveau de l'assise 11 pour ne pas se mettre devant l'écran 30. Plus particulièrement, une partie inférieure du dossier 12 est placée dans un espace 131 prévu à l'arrière de la structure 13. Par conséquent, le côté supérieur du dossier 12 arrive à peine sous l'écran 30, affleurant presque le côté inférieur dudit écran.

Par conséquent, en position assise du sofa 10, une partie du dossier 12 se trouve sous le niveau de la surface supérieure de l'assise 11, ladite partie s'étendant sur une longueur égale à la différence (L₁₂ - Hr). Cette différence étant supérieure à l'épaisseur de l'assise 11, il a été nécessaire d'avoir l'espace 131 dans le corps de la structure 13.

En (b), le sofa 10 est en position de couchage, après une conversion complète. Dans cette position, l'assise 11 et le dossier 12 ont leurs surfaces supérieures dans un même plan et constituent ainsi une surface de couchage qui occupe tout l'espace disponible entre la paroi sur laquelle l'écran 30 est fixé et la console 25 du deuxième fauteuil 20. Suivant la direction longitudinale de la surface de couchage, l'espace disponible s'étend sur une distance sensiblement égale à la somme des longueurs de l'assise 11 et du dossier 12, (L₁₁ + L₁₂), comme schématisé sur la figure 4.

Comme il sera décrit ci-après, le sofa 10 passe de la position assise (a) à la position de couchage (b) avec une cinématique particulière dans laquelle l'assise 11 avance et le dossier 12 remonte pour se dégager de l'espace 131 avant de se rabattre horizontalement.

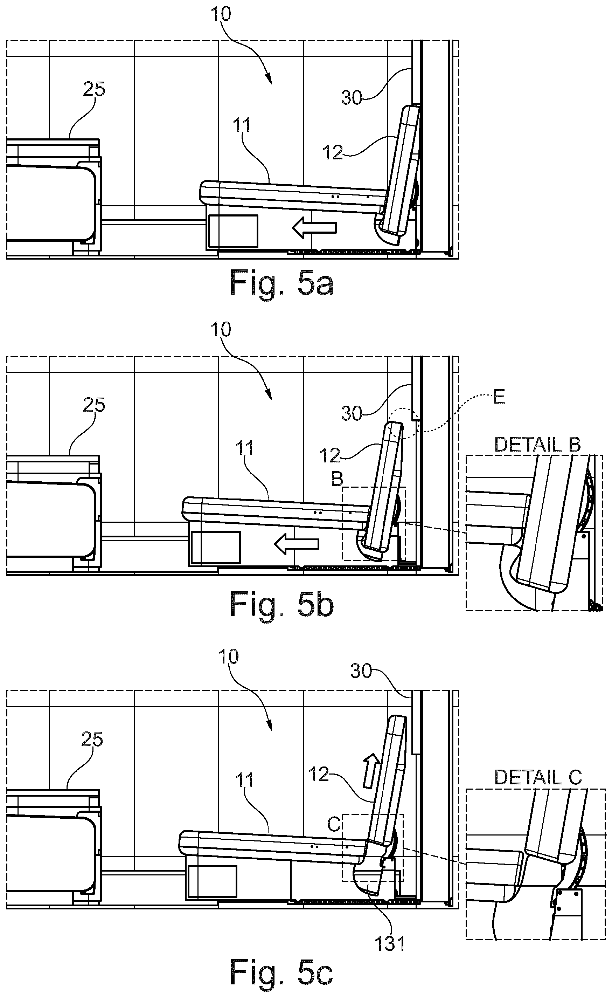

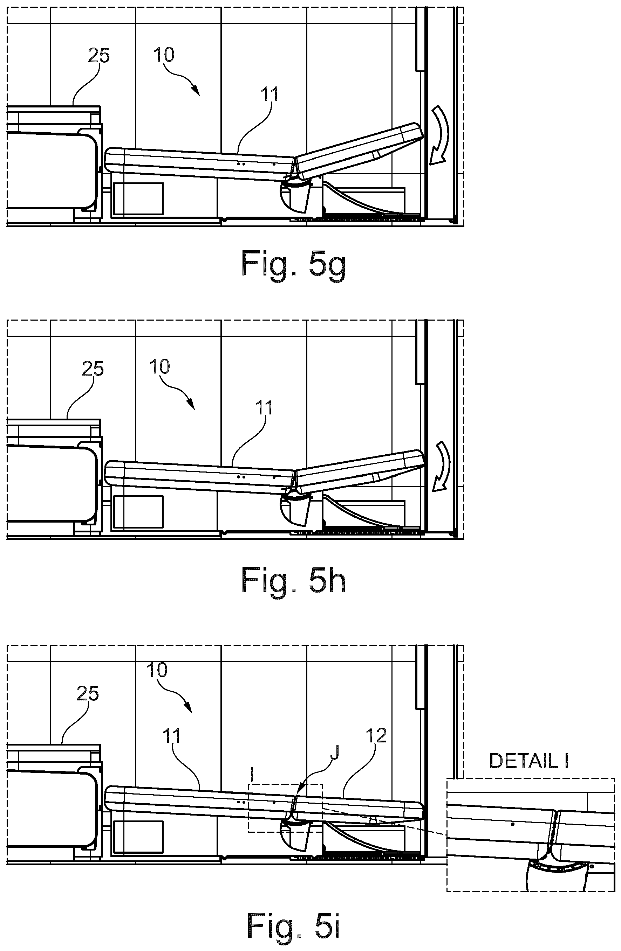

Les figures 5a à 5i représentent des étapes consécutives de la conversion du sofa 10 entre sa position assise, représentée en figure 5a, et sa position de couchage représentée en figure 5i.

Le sofa 10 commence par translater intégralement vers l'avant, parallèlement au plancher, comme représenté sur les figures 5a et 5b. Cette translation se poursuit jusqu'à ce qu'à ce que le dossier 12 se dégage suffisamment de l'écran 30 pour qu'il puisse translater vers le haut.

La figure 5c représente le dossier 12 translaté vers le haut, arrivant ainsi par son côté inférieur au niveau de l'assise 11. A cette étape, le dossier 12 passe provisoirement devant l'écran 30.

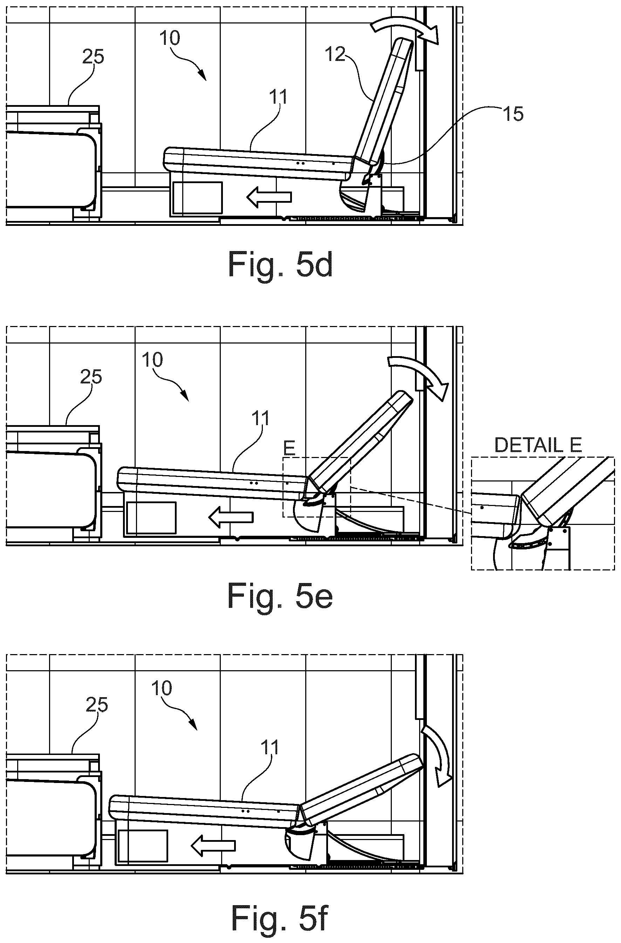

La figure 5d représente ensuite le début de la rotation du dossier 12, en même temps que l'ensemble du sofa 10 continue de translater vers l'avant.

Ce mouvement composé, de translation du sofa 10 et de rotation du dossier 12, se poursuit progressivement et continuellement comme représenté sur les figures 5e et 5f, jusqu'à ce que l'assise 11 arrive à sa position finale représentée sur la figure 5g.

La rotation du dossier 12 s'effectue par le biais d'une crémaillère circulaire 15 permettant de déporter l'axe de rotation du dossier sur la ligne de jonction J entre l'assise 11 et le dossier 12. En effet, la crémaillère 15 est fixée entre le dossier 12 et la structure 13 et permet d'assurer la rotation dudit dossier autour d'un axe fictif qui se confond avec la ligne de jonction J, en sorte qu'aucun vide ne se crée lors de la rotation du dossier.

Lorsque l'assise 11 est dans sa position finale de couchage, seul le dossier 12 poursuit sa rotation pour basculer complétement et s'aligner avec ladite assise pour former la surface de couchage.

Cette dernière phase de rotation du dossier 12, avec l'assise 11 immobile dans sa position finale, est représentée sur les figures 5g à 5i.

Enfin, la figure 5i représente la configuration finale de la position de couchage du sofa 10, dans laquelle les surfaces supérieures de l'assise 11 et du dossier 12 sont sensiblement coplanaires et rapprochées de sorte à éviter la présence d'une fente (gap) au niveau de la ligne de jonction J.

En effet, l'amélioration de la jonction entre l'assise 11 et le dossier 12 est obtenue grâce à une forme particulière de leurs faces latérales destinées à être en contact lorsque le sofa 10 est en position de couchage.

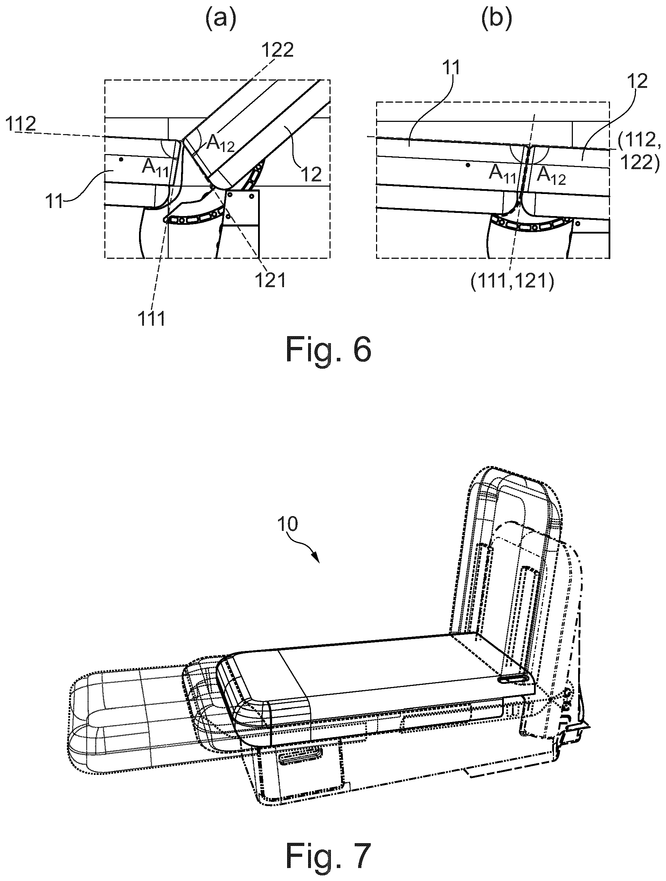

La figure 6 représente la jonction entre l'assise 11 et le dossier 12 du sofa, dans une position intermédiaire lors de la conversion du sofa en (a), et dans la position de couchage en (b).

La face latérale arrière et la face supérieure de l'assise 11 sont respectivement matérialisées par les plans 111 et 112. De même, la face latérale avant et la face supérieure du dossier 12 sont respectivement matérialisées par les plans 121 et 122.

La face latérale avant 121 du dossier 12 est destinée à venir au contact de la face latérale arrière 111 de l'assise 11 lorsque le sofa est en position de couchage comme représenté en (b).

Afin de limiter le gap dans la jonction, la face latérale avant 121 du dossier 12 est inclinée positivement par rapport à la face supérieure 122 dudit dossier, d'un angle A₁₂ supérieur à 90°. En contrepartie, la face latérale arrière 111 de l'assise 11 est inclinée négativement par rapport à la face supérieure 112 de ladite assise, d'un angle A₁₁ inférieur à 90°.

Afin que les faces latérales 111 et 121 s'accolent parfaitement en position de couchage du sofa 10, la somme des angles A₁₁ et A₁₂ est égale à 180°. Cela est visible sur la figure 6 en configuration (b).

Lors de sa conversion de la position assise à la position de couchage ou l'inverse, le sofa opère un mouvement de translation de la structure 13 permettant de faire avancer et reculer le sofa en entier, un mouvement de translation propre du dossier 12 permettant de le monter et de le descendre, et un mouvement de rotation dudit dossier permettant de le rabattre et de le redresser.

Ces trois mouvements sont indépendants et le sofa 10 comprend un actionneur par mouvement.

La figure 7 représente les positions extrêmes du sofa 10 superposées : les positions assise et de couchage ainsi qu'une position intermédiaire de conversion dans laquelle le dossier est remonté. Cela montre que le sofa 10 est de conception compact et se convertit dans un espace réduit grâce à sa cinématique décrite ci-dessus.

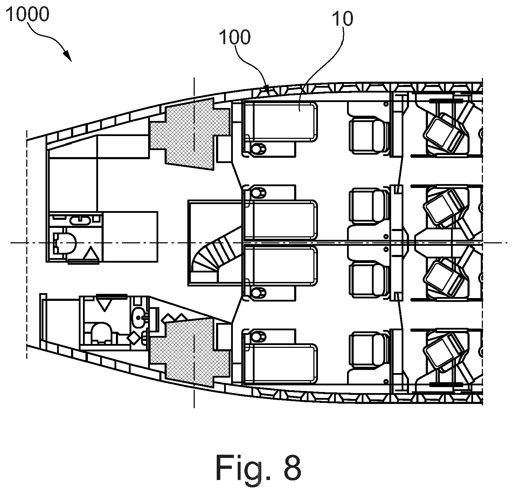

La figure 8 représente un plan partiel, ou LOPA (*layout of passenger arrangment*)*,* d'un avion 1000 comprenant plusieurs compartiments 100. Selon l'exemple de réalisation illustré, l'avion comprend deux compartiments latéraux, séparés par deux compartiments centraux accolés.

Il ressort de la présente description que certains éléments non essentiels du sofa peuvent être modifiés, remplacés ou supprimés sans pour autant sortir du cadre de l'invention défini par les revendications ci-après.

## Revendications

1. Sofa (10) pour véhicule de transport de passagers tel qu'un avion, comportant une assise (11), un dossier (12) présentant une longueur de dossier (L12) et une structure (13) les supportant, ledit sofa étant convertible en au moins deux positions présentant chacune une surface maximale utilisable par le passager : une position assise dans laquelle le dossier est redressé par rapport à l'assise et une position de couchage dans laquelle le dossier est rabattu dans un même plan par rapport à l'assise ; ladite assise présentant une longueur d'assise (L11) suffisante pour permettre à un passager en position assise d'allonger complètement ses jambes, en position assise, le dossier (12) étant partiellement stocké au-dessous de l'assise (11) dans un espace (131) de la structure (13), de sorte que la surface maximale utilisable en position assise est inférieure à la surface maximale utilisable en position de couchage, la structure (13) étant montée mobile en translation suivant une direction longitudinale, entrainant avec elle l'assise (11) et le dossier (12), ledit dossier étant monté mobile à la fois en translation, suivant sa propre direction longitudinale lorsqu'il est redressé en position assise, et en rotation autour d'un axe transversal situé au niveau d'une jonction (J) entre l'assise (11) et le dossier (12).

2. Sofa selon la revendication 1, dans lequel les mouvements de translation de la structure (13) permettant de faire avancer et reculer le sofa, de translation propre du dossier (12) permettant de le monter et de le descendre, et de rotation dudit dossier permettant de le rabattre et de le redresser, sont indépendants, ledit sofa comprenant un actionneur par mouvement.

3. Sofa selon la revendication 1 ou 2, dans lequel le mouvement de rotation du dossier (12) est effectué au moyen d'une crémaillère circulaire (15) reliant ledit dossier à la structure (13) et permettant de déporter l'axe de rotation du dossier au niveau de la jonction (J) avec l'assise (11).

4. Sofa selon l'une quelconque des revendications précédentes, dans lequel la longueur de dossier (L12) est inférieure à la longueur d'assise (L11), donnant au sofa une forme de méridienne.

5. Sofa selon l'une quelconque des revendications précédentes, dans lequel l'assise (11) et le dossier (12) comprennent des faces latérales respectivement arrière (111) et avant (121) destinées à s'accoler en position de couchage du sofa, ladite face latérale arrière et ladite face latérale avant étant inclinées respectivement par rapport à la surface supérieure (112) de l'assise d'un angle (A11) inférieur à 90° et par rapport la surface supérieure (122) du dossier d'un angle (A12) supérieur à 90°, la somme des deux angles étant égale à 180°.

6. Compartiment (100) pour véhicule de transport de passagers tel qu'un avion, comprenant au moins une console (15) de commodité et un écran (30), et **caractérisé en ce qu'**il comprend un sofa (10) selon l'une des revendications précédentes, ledit écran étant placé au-dessus du dossier (12).

7. Compartiment selon la revendication 6, dans lequel l'écran (30) est placé à une hauteur (Hr) de l'assise (11) lorsque le sofa (10) est en position assise, ladite hauteur étant inférieure à la longueur de dossier (L12), un surplus de longueur dudit dossier étant stocké au-dessous de l'assise.

8. Compartiment selon la revendication 6 ou 7, comprenant en outre un fauteuil d'appoint (20) placé en face et en regard du sofa (10).

9. Avion de ligne (1000), **caractérisé en ce qu'**il comprend au moins un compartiment (100) selon l'une des revendications 6 à 8.

## Patentansprüche

1. Sofa (10) für ein Personenbeförderungsfahrzeug wie ein Flugzeug, das eine Sitzfläche (11), eine Rückenlehne (12) mit einer Rückenlehnenlänge (L12) und eine diese tragende Struktur (13) aufweist, wobei das Sofa in mindestens zwei Positionen umbaubar ist, die jeweils eine maximale, vom Passagier nutzbare Fläche aufweisen: eine Sitzposition, in der die Rückenlehne in Bezug auf die Sitzfläche aufgerichtet ist, und eine Liegeposition, in der die Rückenlehne in einer Ebene in Bezug auf die Sitzfläche umgeklappt ist; wobei die Sitzfläche eine Sitzflächenlänge (L11) aufweist, die ausreichend ist, um es einem sitzenden Passagier zu ermöglichen, seine Beine in der Sitzposition vollständig auszustrecken, wobei die Rückenlehne (12) teilweise unter der Sitzfläche (11) in einem Raum (131) der Struktur (13) gelagert ist, so dass die in der Sitzposition nutzbare maximale Fläche kleiner ist als die in der Liegeposition nutzbare maximale Fläche, wobei die Struktur (13) in Längsrichtung translatorisch bewegbar angebracht ist, wobei sie mit sich die Sitzfläche (11) und die Rückenlehne (12) antreibt, wobei die Rückenlehne sowohl translatorisch in ihrer eigenen Längsrichtung, wenn sie in Sitzposition aufgerichtet ist, als auch rotatorisch um eine Querachse, die sich im Bereich einer Verbindung (J) zwischen der Sitzfläche (11) und der Rückenlehne (12) befindet, bewegbar angebracht ist.

2. Sofa nach Anspruch 1, wobei die Translationsbewegungen der Struktur (13), die erlauben, das Sofa vor- und zurückzuschieben, die Eigentranslationsbewegungen der Rückenlehne (12), die erlauben, sie anzuheben und abzusenken, und die Rotationsbewegungen der Rückenlehne, die erlauben, sie umzuklappen und aufzurichten, unabhängig sind, wobei das Sofa einen Aktuator pro Bewegung umfasst.

3. Sofa nach Anspruch 1 oder 2, wobei die Rotationsbewegung der Rückenlehne (12) mittels einer kreisförmigen Zahnstange (15) erfolgt, die die Rückenlehne mit der Struktur (13) verbindet und es erlaubt, die Rotationsachse der Rückenlehne im Bereich der Verbindung (J) mit der Sitzfläche (11) zu versetzen.

4. Sofa nach einem der vorhergehenden Ansprüche, wobei die Rückenlehnenlänge (L12) kürzer ist als die Sitzflächenlänge (L11), wodurch das Sofa eine Chaiselongue-Form erhält.

5. Sofa nach einem der vorhergehenden Ansprüche, wobei die Sitzfläche (11) und die Rückenlehne (12) jeweils hintere (111) und vordere (121) Seitenflächen umfassen, die dazu bestimmt sind, in der Liegeposition des Sofas aneinanderzureihen, wobei die hintere Seitenfläche und die vordere Seitenfläche jeweils in Bezug auf die obere Oberfläche (112) der Sitzfläche (A11) um einen Winkel von weniger als 90° und in Bezug auf die obere Oberfläche (122) der Rückenlehne um einen Winkel (A12) von mehr als 90° geneigt sind, wobei die Summe der beiden Winkel 180° beträgt.

6. Fach (100) für ein Personenbeförderungsfahrzeug wie ein Flugzeug, umfassend mindestens eine Komfortkonsole (15) und einen Bildschirm (30), und **dadurch gekennzeichnet, dass** es ein Sofa (10) nach einem der vorhergehenden Ansprüche umfasst, wobei der Bildschirm über der Rückenlehne (12) angeordnet ist.

7. Fach nach Anspruch 6, wobei der Bildschirm (30) in einer Höhe (Hr) der Sitzfläche (11) platziert ist, wenn sich das Sofa (10) in Sitzposition befindet, wobei die Höhe kleiner ist als die Rückenlehnenlänge (L12), wobei ein Überschuss an Länge der Rückenlehne unter der Sitzfläche gelagert ist.

8. Fach nach Anspruch 6 oder 7, ferner umfassend einen Zusatzsessel (20), der gegenüber und dem Sofa (10) zugewandt angeordnet ist.

9. Linienflugzeug (1000), **dadurch gekennzeichnet, dass** es wenigstens ein Fach (100) nach einem der Ansprüche 6 bis 8 umfasst.

## Claims

1. A sofa (10) for passenger transport vehicle such as an airplane, comprising a seat section (11), a backrest (12) having a backrest length (L12) and a structure (13) supporting them, said sofa being convertible into at least two positions each having a maximum surface area usable by the passenger: a sitting position in which the backrest is set upright with respect to the seat section and a reclining position in which the backrest is folded down in the same plane with respect to the seat section; said seat section having a seat section length (L11) sufficient to enable a passenger in a sitting position to fully extend their legs, in a sitting position, the backrest (12) being partially stored below the seat section (11) in a space (131) of the structure (13), so that the maximum usable surface area in the sitting position is smaller than the maximum usable surface in the reclining position, the structure (13) being mounted movable in translation along a longitudinal direction, driving the seat section (11) and the backrest (12) therewith, said backrest being mounted movable both in translation, along its own longitudinal direction when it is set upright in the sitting position, and in rotation about a transverse axis located at a junction (J) between the seat section (11) and the backrest (12).

2. The sofa according to claim 1, wherein the movements of translation of the structure (13) for moving the sofa forward and back, of separate translation of the backrest (12) for raising and lowering it, and of rotation of said backrest for folding it down and setting it upright, are independent, said sofa comprising one actuator per movement.

3. The sofa according to claim 1 or 2, wherein the rotational movement of the backrest (12) is carried out by means of a circular rack (15) connecting said backrest to the structure (13) and making it possible to offset the axis of rotation of the backrest at the junction (J) with the seat section (11).

4. The sofa according to any one of the preceding claims, wherein the length of the backrest (12) is smaller than the length of the seat section (11), conferring a chaise longue shape on the sofa.

5. The sofa according to any one of the preceding claims, wherein the seat section (11) and the backrest (12) comprise respectively rear (111) and front (121) lateral faces intended to be adjoined in the reclining position of the sofa, said rear lateral face and said front lateral face being inclined respectively with respect to the top surface (112) of the seat section at an angle (A11) of less than 90° and with respect to the top surface (122) of the backrest at an angle (A12) greater than 90°, the sum of the two angles being equal to 180°.

6. A compartment (100) for a passenger transport vehicle such as an airplane, comprising at least an amenity console (15) and a screen (30), and **characterized in that** it comprises a sofa (10) according to one of the preceding claims, said screen being positioned above the backrest (12).

7. The compartment according to claim 6, wherein the screen (30) is positioned at a height (Hr) from the seat section (11) when the sofa (10) is in the sitting position, said height being less than the backrest length (L12), an excess length of said backrest being stored beneath the seat section.

8. The compartment according to claim 6 or 7, further comprising an extra chair (20) placed across in front of and facing the sofa (10).

9. An airliner (1000), **characterized in that** it comprises at least one compartment (100) according to one of claims 6 to 8.
